# EUROPÄISCHE PATENTSCHRIFT

(11) **EP 1 437 606 B1**
(45) Veröffentlichungstag und Bekanntmachung des Hinweises auf die Patenterteilung: **18.07.2018**
(21) Anmeldenummer: 04000793.2
(22) Anmeldetag: 21.01.1999
(51) Int. Cl.: G02B 1/10, G02B 5/28, H01J 9/233, G02B 5/20

(54) **Verfahren zur Herstellung einer Struktur von Interferenz-Farbfiltern**
Method of making a structure of interference filters
Méthode de fabrication d'une structure de filtres d'interférence

(30) Priorität: 20.02.1998 CH 4171998
(43) Veröffentlichungstag der Anmeldung: 14.07.2004
(62) Teilanmeldung aus: 99900426.0
(73) Patentinhaber: Oerlikon Surface Solutions AG, Pfäffikon, 8808 Pfäffikon SZ (CH)
(72) Erfinder: Edlinger, Johannes, 6820 Frastanz (AT); Sperger, Reinhard, 6800 Feldkirch (AT); Simotti, Maria, 7323 Wangs (CH)
(74) Vertreter: Troesch Scheidegger Werner AG

(56) Entgegenhaltungen:
- US-A- 4 029 394
- US-A- 4 313 648
- US-A- 5 164 858
- US-A- 5 246 803
- US-A- 5 510 215
- US-A- 5 689 318

## Beschreibung

Die vorliegende Erfindung betrifft eine Farbfilterschichtstruktur, abgelegt auf einem Substrat. Bei der Lift-Off-Technik wird eine strukturierte Lackschicht mit Lackschichtflächenbereichen und lackschichtfreien Bereichen abgeschieden. Dann wird ein Farbfilterschichtsystem abgelegt und schliesslich werden mit den Lackschichtflächenbereichen die darauf abgelegten Bereiche des Farbfilterschichtsystems entfernt.

Eine solche Technik ist als Lift-Off-Technik bekannt. Sie ist relativ kostengünstig, weil dabei relativ wenig Prozessschritte in Vakuumatmosphäre durchzuführen sind. Diese Technik ist beispielsweise aus der US-A-3 914 464 bekannt:
Als Lift-Off-Maske wird ein Fotolack bzw. eine Metallschicht mit einer vorgegebenen Dicke von beispielsweise 4 bis 6 µm abgeschieden und darüber ein dielektrisches Interferenz-Farbfilterschichtsystem nur der halben Dicke. Vor Abscheiden des Farbfilter-Schichtsystems wird der Lift-Off-Lack während langer Zeit, über 8 Stunden bei 200°C, in Vakuumatmosphäre gehärtet. Der Lift-Off-Lack bzw. dessen strukturierte Flächen werden nach Abscheiden des Farbfilterschichtsystems mit heissem Xylol im eigentlichen Lift-Off-Schritt entfernt.

US-A-5,164,858 beschreibt eine Farbfilterflächenstruktur gemäß dem Stand der Technik, die durch eine Lift-Off-Technik erhalten wird. Es ist augenfällig, dass die Lift-Off-Lackschichtstruktur aufwendig behandelt wird, und zwar so, dass, als Abscheideverfahren für das Farbfilterschichtsystem, Aufdampfen überhaupt eingesetzt werden kann. Um nämlich eine genügende Qualität der abgeschiedenen Systemschichten sicherzustellen, muss eine Aufdampftemperatur von über 200°C eingehalten werden. Die darunterliegende Lackschicht muss mithin ohne Veränderung diesen Temperaturen standhalten.

Es ist im weiteren aus der Literatur, z.B. aus H.A. MACLEOD, "Thin-Film Optical Filters" 2nd edition, Adam Hilger Ltd., 1986, Seiten 357 bis 405, bekannt, dass bei tieferen Temperaturen aufgedampfte optische Schichten spektral nicht stabil sind. Ihre spektralen Eigenschaften verändern sich mit der Umgebungstemperatur und der Luftfeuchtigkeit, wobei insbesondere die Cut-on- und Cut-off-Kanten der spektralen Charakteristik spektral verschoben werden. Will man spektral stabile Schichten, die eine genügende Qualität aufweisen, abscheiden, so muss die Aufdampftemperatur sehr hoch gewählt werden, was dazu führt, dass der darunterliegende Lack polymerisiert und der nachmalige Lift-Off-Prozess äusserst erschwert wird. Versucht man hingegen die Temperatur des Aufdampfprozesses niedrig zu halten, so erkauft man sich dies, wie erwähnt, durch starke Temperatur- und Luftfeuchtigkeits-abhängige spektrale Verschiebungen der erwähnten Kanten.

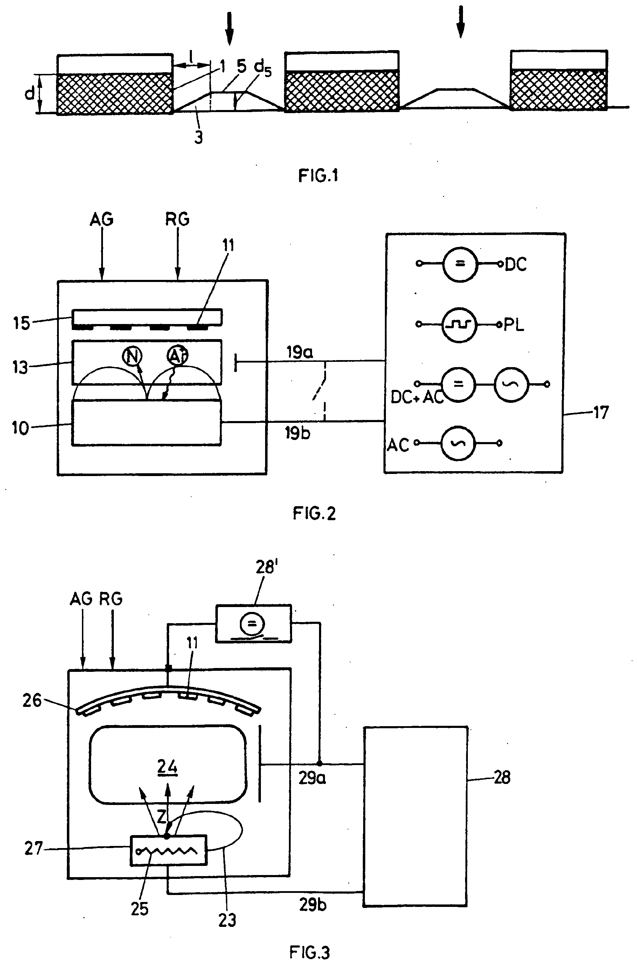

Im weiteren ist das in obgenannter Schrift vorgeschlagene lange Ausheizen des Lackes in Vakuum äusserst kostenaufwendig und reduziert die Ausstossrate von Herstellungsanlagen für derartige Strukturen wesentlich. Weiter ist der Einsatz von heissem Xylol zur Auflösung des zwingend relativ hohen Temperaturen standhaltenden Lackes, mit Blick auf die Cancerogenität von Xylol, höchst bedenklich. Weil weiter, aufgrund des Aufbringverfahrens des Farbfilterschichtsystems bei Temperaturen weit über 200°C, eine diese Temperaturen standhaltende Lackschicht vorgesehen werden muss, müssen für die nachmalige Entfernung des Lacks grosse Angriffsflächen für das Lösungsmittel bereitgestellt werden. Deshalb muss die Lackschichtdicke wesentlich höher gewählt werden als die Dicke der darüber abzulegenden Farbfilterschichtsysteme. Dies ergibt grosse gestörte Zonen: Wird, anschliessend an die Belackung und die Strukturierung der Lackschicht, in Lack- und lackfreie Bereiche ein Farbfilter-Teilsystem abgeschieden, so ergeben sich, wie in Fig. 1 dargestellt ist, wegen der Abschattung durch die Kanten der Lackbereiche 1, in den Randbereichen 3 der Farbfilterstruktur, gestörte Zonen, in denen die Farbfilterstruktur-Dicke kleiner ist als in ungestörten Bereichen 5. Je grösser die Lackdicke d ist, desto grösser werden die gestörten Farbfilterstruktur-Bereiche.

Zudem ist es bekannt, dass Substratgläser bei den für das Aufdampfen der erwähnten Farbfilterschichtsysteme notwendigen Temperaturen schrumpfen, d.h. ihre Form ändern. Dies führt dazu, dass das nebeneinander erfolgende Abscheiden von Farbfilterschichtsystemen mit unterschiedlichen Spektren, wie beispielsweise für Rot, Gelb und Blau, geometrisch nicht exakt erfolgen kann, was zu Unschärfen zwischen Filterbereichen unterschiedlicher Spektralbereiche führt.

Weiter versprödet das Glassubstrat bei den erwähnten hohen Temperaturen, insbesondere unter Berücksichtigung der thermischen Wechselbeanspruchung, beispielsweise beim Hintereinander-Abscheiden von mehreren Farbfilterschichtsystemen in Lift-Off-Technik. Dies führt zur Beeinträchtigung der Bruchfestigkeit der hergestellten Strukturen und damit auch zur Erhöhung des Ausfalls.

Eine weitere Alternative wäre es, einen Lack zu verwenden, der den hohen geforderten Aufdampftemperaturen standhält, also Temperaturen im Bereiche von 300°C. Solche Lacke sind jedoch teuer und schwierig zu verarbeiten.

Weiter könnte man Liftoffmasken aus Metall, z.B. aus Al oder Cr einsetzen. Da ihr Aufbringen jedoch üblicherweise wieder einen Vakuumbeschichtungsschritt erfordert, wäre auch dies zu teuer.

Es ist Aufgabe der vorliegenden Erfindung, ausgehend von einem Verfahren obgenannter Art, die erwähnten Nachteile zu beheben. Dies wird bei Ausführung des genannten Verfahrens nach dem kennzeichnenden Teil von Anspruch 1 erreicht.

Dadurch wird es möglich, den Lift-Off-Lack beim Abscheiden der Filterschichtsysteme wesentlich weniger thermisch zu beanspruchen, d.h. weit unterhalb der Polymerisationstemperatur beispielsweise konventioneller Fotolacke. Durch die vorgeschlagenen plasmaunterstützen Abscheideverfahren, bei denen das Substrat einer hohen Ionenbeschussdichte ausgesetzt ist, vorzugsweise durch plasmaunterstütztes Bedampfen oder durch Sputtern, entstehen darüber hinaus Filter mit dichten Schichten und mit temperatur- und feuchtigkeitsstabilen Spektraleigenschaften. Weil der Lack thermisch wesentlich weniger beansprucht wird, kann seine notwendige thermische Widerstandsfähigkeit massgeblich reduziert werden, was seinerseits dazu führt, dass eine wesentlich kürzere Lackbehandlung und wesentlich reduzierte Lackschichtdicken erforderlich sind, was wiederum die Ausdehnung der gestörten Bereiche 3 nach Fig. 1 reduziert. Darüber hinaus können konventionelle Fotolacke eingesetzt werden und mittels üblicher Lösungsmittel, wie mittels Aceton oder NMP (N-Methyl-2-Pyrrolidon) für den Lift-Off gelöst werden. Dieses Verfahren
- ergibt mithin wesentlich reduzierte Beschichtungstemperaturen, was zur Reduktion der notwendigen Lackdicke und zur Verwendbarkeit üblicher kostengünstiger Lacke führt. Die sich weiter ergebende Lackdickenreduktion führt direkt zur Reduktion der Ausdehnung der Störbereiche gemäss Fig. 1.
- Durch die Plasmaunterstützung der Beschichtung, sei dies durch Erzeugung geladener Teilchen in einer separaten Plasmakammer, Extraktion durch Gitter in den Beschichtungsraum oder durch Plasmaerzeugung im Beschichtungsraum, wird eine Bombardierung der Substrate mit einem Ionenstrom hoher Dichte realisiert, womit dichte, optisch stabile Filterschichten realisiert werden.
- Die Ausdehnung der durch Abschattung bewirkten Störstellen kann durch zusätzliche Richtmassnahmen, wie Vorsehen von Kolliminatoren oder durch elektrostatische Ausrichtung der Ionenbewegung, reduziert werden. Es werden auch möglichst niedrige Drücke in der Beschichtungskammer eingesetzt, mit entsprechend grosser mittlerer freien Weglänge.

Wird, ohne Vorsehen zusätzlicher Richtmassnahmen, Sputtern eingesetzt, so ergeben sich, gemäss Fig. 1, gestörte Bereiche 3 mit einer Ausdehnung von ca. 5 * d, mit mehr gerichteten plasmaunterstützten Verfahren bis hinab zu ca. 1 * d. Dies bei den erfindungsgemäss bereits an sich geringen Werten für d.

Ein mehr gerichtetes Beschichtungsverfahren als Sputtern ist plasmaunterstütztes Aufdampfen, bei welchem, wie bekannt, Material aus einem Verdampfungstiegel in die Prozessatmosphäre thermisch verdampft wird, beispielsweise durch Elektronenstrahlverdampfen, wobei in der Atmosphäre ein Plasma unterhalten wird. Damit wird das Problem der Abschattung noch weitergehender behoben, und es wird möglich, auch Farbfilterschichtsystemstrukturen mit sehr kleinen Ausdehnungen beherrscht und mit hoher Effizienz abzuscheiden.

Das vorgeschlagene Verfahren eignet sich insbesondere für die Farbfilterstrukturierung für LCD-Projektoren und CCD-Sensoren.

Nachfolgend wird die Erfindung anhand von Figuren beispielsweise erläutert.

Diese zeigen:
- Fig. 1:: eine schematische Darstellung eines belackten, strukturierten und beschichteten Substrates zur Erläuterung der Entstehung gestörter Bereiche,
- Fig. 2:: schematisch eine für die Durchführung des erfindungsgemässen Verfahrens geeignete Sputterbeschichtungsanlage in schematischer Form,
- Fig. 3:: eine zur Durchführung des erfindungsgemässen Verfahrens geeignete Anlage zum plasmaunterstützten thermischen Aufdampfen, wiederum schematisch dargestellt,
- Fig. 4:: schematisch eine auf einem Substrat abgelegte Lackstruktur und deren Abrundung der nachfolgenden Beschichtung und
- Fig. 5:: in Darstellung analog zu Fig. 4 das Vorsehen einer Zwischenschicht zwischen Lackstruktur und nachfolgend abgeschiedener Filterschicht zur Vermeidung der anhand von Fig. 4 erläuterten Verrundung der Kanten des Photolacks.

In Fig. 2 ist eine erste Ausführungsvariante einer Anlage für erfindungsgemäss eingesetztes Sputtern schematisch dargestellt. Über einer Sputterquelle 10 mit dem Target abzusputternden Materials, wie beispielsweise einer Magnetronquelle, wird ein Plasma 13 unterhalten. Ionen eines zugeführten Arbeitsgases AG, wie beispielsweise Ar, schlagen durch Impulsübertragung überwiegend neutrale Targetmaterial-Partikel N aus dem Target, welche sich auf dem Werkstück 15 niederlegen. Wie schematisch an der Speiseeinheit 17 dargestellt, kann das Plasma über der Sputterquelle DC- oder mittels einer gepulsten Gleichspannung PL oder grundsätzlich mittels überlagertem DC- und AC- oder mit AC-, insbesondere mit RF-, Leistung betrieben werden. Aufgrund der im vorliegenden Fall interessierenden Abscheidung dielektrischer Schichten an üblicherweise nichtleitenden Werkstücksubstraten 15 wird insbesondere auf die Möglichkeit verwiesen, das Plasma mittels einer Gleichspannung zu betreiben, jedoch die plasmaerzeugenden Elektroden, in Fig. 2 schematisch bei 19a und 19b dargestellt, und wie daran gestrichelt angedeutet, in vorgegebenen Zeitabschnitten, vorzugsweise periodisch, niederohmig zu verbinden. Bezüglich der plasmaunterstützten Beschichtung nichtleitender Substrate mit dielektrischen Schichten und unter Einsatz von DC-Plasmen bzw. von Substrat-Bias kann verwiesen werden auf:
- EP-508 359 bzw.
   US-5 423 970;
- EP-564 789 bzw. die US-Anmeldungen
   US SN 08/300865
   US SN 08/641707.

Die Schichten der Farbfilterschichtsysteme werden jeweils entweder nicht-reaktiv, also ausschliesslich unter Verwendung des Arbeitsgases AG und/oder durch einen reaktiven Sputterprozess und Verwendung eines Reaktivgases RG, wie von O₂ erzeugt, z.B. je nachdem, welche Schichtmaterialien eingesetzt werden. Dabei werden erfindungsgemäss Temperaturen der beschichteten, mit dem Lift-Off-Lack 11 versehenen Werkstücke 15 von höchstens 150°C, vorzugsweise von höchstens 100°C, eingehalten.

Aufgrund der hohen Ionenbeschussdi-hte werden dichte Schichten realisiert, die ihre spektralen Eigenschaften, bei wechselnder Umgebungstemperatur und Luftfeuchtigkeit, kaum mehr ändern.

Ohne weitere Richtmassnahmen, wie Vorsehen von Kollimatoren, eignet sich das erfindungsgemässe Sputterbeschichten für Anwendungen, bei denen gestörte Bereiche 3 gemäss Fig. 1 mit einer Ausdehnung von ca. 5 * d in Kauf genommen werden können.

In Fig. 3 ist, in Darstellungsweise analog zu Fig. 1, ein zweites erfindungsgemäss eingesetztes Verfahren schematisch dargestellt, nämlich plasmaunterstütztes bzw. ionenunterstütztes Verdampfen. Hierbei wird z.B. mittels eines Elektronenstrahls 23 und/oder einer Heizung 25 Material aus einem Tiegel 27 verdampft. Wiederum wird mit einer Speisequelle 28, welche, was die ausgegebenen Signale angelangt, analog zu der anhand von Fig. 2 erläuterten Quelle 17 aufgebaut sein kann, ein dichtes Plasma 24 oberhalb des Tiegels 27 unterhalten. Die Werkstücke sind hier vorzugsweise an einer drehgetriebenen Träger-Kalotte 26 angebracht, deren Kugelzentrum das Zentrum Z der Verdampfungsquelle 27 ist. Wiederum werden Temperaturen von höchstens 150°C eingehalten, insbesondere von höchstens 100°C. Dieses gerichtete Verfahren ermöglicht es, Lift-Off-Lackstrukturen 11 mit Filterschichtsystemen zu beschichten, welche gestörte Bereiche 3 gemäss Fig. 1 erfordern, deren Ausdehnung ca. 1 * d und weniger beträgt.

Auch beim plasmaunterstützten bzw. ionenunterstützten Verdampfen gemäss Fig. 3 wird je nach aufzubauender Schicht des Farbfilterschichtsystems nicht-reaktiv unter ausschliesslicher Verwendung des Arbeitsgases AG, oder reaktiv unter Verwendung eines Reaktivgases RG gearbeitet.

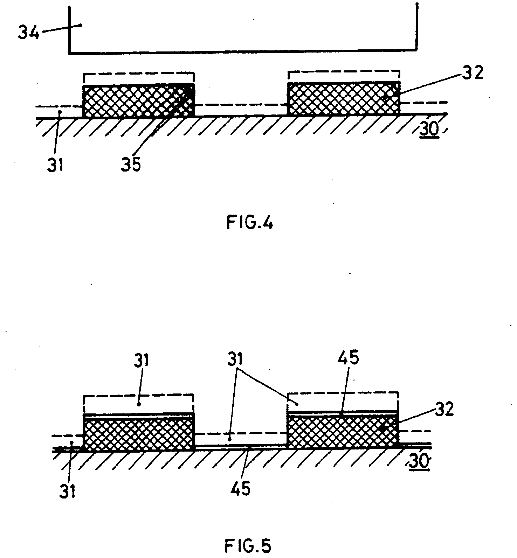

In Fig. 4 ist, vergrössert, auf dem Substrat 30 die Lift-Off-Lackstruktur 32 dargestellt. Darüber ist schematisch das Plasma 34 des plasmaunterstützten Abscheideverfahrens dargestellt. Soll die erste Schicht 31 des Farbfilterschichtsystems, in Fig. 4 gestrichelt dargestellt, durch einen reaktiven Prozess abgelegt werden, wie insbesondere unter Verwendung ionisierten Sauerstoffes, so wird die Lift-Off-Lackstruktur, wie bei 35 schematisch angedeutet, insbesondere in den Kantenbereichen durch angeregtes Reaktivgas, wie erwähnt insbesondere O₂ oder durch im Plasma aktiviertes und/oder gespaltenes H₂O aus dem Restgas angegriffen.

Eine erste Möglichkeit, dies zu unterbinden, besteht darin, die erste Schicht des Farbfilterschichtsystems nicht-reaktiv abzulegen, also mit Blick auf Fig. 2 bzw. Fig. 3 unter ausschliesslicher Verwendung des Arbeitsgases Ar. Hierzu wird das Schichtmaterial entweder direkt als Target- bzw. Verdampfungsquellen-Material eingesetzt.

Eine zweite und erfindungsgemässe Möglichkeit besteht gemäss Fig. 5 darin, vor dem Aufbringen der ersten Schicht 31 des Farbfilterschichtsystems, eine optisch breitbandig und weitgehendst verlustlos transmittierende, d.h. optisch neutrale, gut haftende Zwischenschicht auf die Lift-Off-Lackstruktur aufzubringen, die, als Schutzschicht, dem nachfolgenden Prozess standhält. Die in Fig. 5 dargestellte Zwischenschicht 45 mit einer Dicke von 5 bis 10 nm besteht bevorzugterweise aus SiO oder SiO₂, welches durch angeregtes ionisiertes Reaktivgas, insbesondere O₂ bzw. H₂O aus dem Restgas, chemisch nicht angegriffen wird. In Fig. 5 bezeichnet die gestrichelt eingetragene Schicht 31 die nachmals aufgebrachte erste optisch aktive Schicht des Farbfilterschichtsystems, die nun durch einen reaktiven Prozess abgelegt werden kann. Im weiteren kann die Zwischenschicht 45 auch aus SiO₂ bestehen, das nicht- oder nur schwach reaktiv abgeschieden wird. Eine SiO₂-Zwischenschicht bildet dann die erste, niedrigerbrechende Schicht des Filterschichtsystems mit folgenden, höherbrechenden Schichten.

Es werden nachfolgend beispielsweise eingesetzte Beschichtungsverfahren mit den resultierenden Farbfilterstrukturen vorgestellt.

### Beispiel 1:

- Substrat: Glas
- Filterstruktur: Streifen 160 µm breit,
   20 mm lang, 100 µm Abstand
- Lackschichtdicke: 3.2 µm
- Lack: Shipley 1045, 6:1 verdünnt.
- opt. Filterschichtsystem: 1,5 µm (d₅ von Fig. 1)
- Schichtsystem: SiO₂ / TiO₂
- Beschichtungsprozess SiO₂: Reaktives Sputtern, Anlage BAS 767
   - Quelle: Si-Target
   - Sputterleistung: 6.4 kW
   - Arbeitsgas: Ar
   - Reaktivgas: O₂
   - Fluss Arbeitsgas: 40 sccm
   - Fluss Reaktivgas: 50 sccm
   - Rate: 0.3 nm/sec
- Beschichtungsprozess TiO₂: Reaktives Sputtern
   - Quelle: Ti-Target
   - Sputterleistung: 10 kW
   - Arbeitsgas: Ar
   - Reaktivgas: O₂
   - Fluss Arbeitsgas: 40 sccm
   - Fluss Reaktivgas: 36 sccm
   - Rate: 0.16 nm/sec
   - Beschichtungstemperatur: T ≤ 80°C

### Resultate:

### Grösse der gestörten Zone

neben der Lackmaske (1 von Fig. 1) : ≤ 10 µm
Stabilität der Kanten des Filters: ≤ 1 nm Kantenshift von 20°C bis 80°C

Bei diesem Beispiel wird auf die Zwischenschicht verzichtet. Das Plasma wird vor Beginn der eigentlichen Beschichtung eingeschaltet. Daher kommt die Lackmaske mit O2/Ar Plasma in Berührung. Dadurch werden die Kanten des Lacks verrundet. Dies erschwert den Lift-Off-Schritt bzw. macht eine relativ dicke Lackmaske notwendig.

### Beispiel 2:

- Substrat: Glas
- Filterstruktur: Streifen 10 x 10 µm bis 100 x 100 µm
- Lackschichtdicke (d): 0,5 µm - 2 µm
- opt. Filterschicht (d₅) :1,4 µm
- Lack: Shipley 1045, Verdünnung 6:1 bis 1:1
- Schichtsystem: Zwischenschicht SiO, 10 nm dick, SiO₂ / TiO₂
- Beschichtungsprozess: SiO-Zwischenschicht nichtreaktiv ohne Plasmaunterstützung, SiO₂/TiO₂ System plasmaunterstütztes Aufdampfen, Anlage LEYBOLD APS 1100

SiO nichtreaktiv, ohne APS Plasmaquelle:
- Quelle E-Strahlverdampfer mit Vierlochtiegel, SiO-Granulat
- Rate: 0.1 nm/sec
- Anlage: BAS 767
- Druck: 1*10⁻⁵ mbar

SiO₂: Reaktives Aufdampfen mit APS-Plasmaquelle
- Quelle: E-Strahlverdampfer mit Vierlochtiegel, SiO₂-Granulat
- Rate: 0.6 m/sec

### APS-Plasmaquelle:

- Entladungsstrom: 50 A
- Biasspannung: 150 V
- UAnode-Kathode: 130 V
- Arbeitsgas: Ar
- Reaktivgas: O₂
- Fluss Arbeitsgas: 15 sccm
- Fluss Reaktivgas: 10 sccm
- Totaldruck: 3.5*10⁻³ mbar

### TiO₂: Reaktives Aufdampfen mit APS-Plasmaquelle

- Quelle: E-Strahlverdampfer mit Vierlochtiegel, TiO-Tabletten
- Rate: 0.3 m/sec

### APS-Plasmaquelle:

- Entladungsstrom: 50 A
- Biasspannung: 110 - 120 V
- UAnode-Kathode: 100 - 110 V
- Arbeitsgas: Ar
- Reaktivgas: O₂
- Fluss Arbeitsgas: 11 sccm
- Fluss Reaktivgas: 35 sccm
- Totaldruck: 4.2*10⁻³ mbar
- Beschichtungstemperatur: T ≤ 105°C

### Resultate:

Stabilität: < 1 nm spektrale Kantenshift von 20°C bis 80°C
Grösse (1) der gestörten Zone: < 2 µm

Durch das erfindungsgemässe Vorgehen wird es möglich, Pixelstrukturen, wie insbesondere für LCD-Lightvalve-Projektoren und CCD-Sensoren, kostengünstig und mit geringer Ausschussquote herzustellen, die darüber hinaus gegenüber Umweltsveränderungen, insbesondere Temperatur- und Feuchtigkeits-änderungen, spektral höchst stabil sind. Insbesondere unter Einsatz der erwähnten Zwischenschicht wird zudem eine äusserst gute Haftung der Farbfiltersysteme auf dem Substrat erreicht. Die notwendigen Lift-Off-Lackschichten können wesentlich dünner als das Doppelte der darüber abgelegten Farbfilterschichtsysteme sein. Das Vorsehen überhängender Seitenwände der Lackbereiche, wie bei der Aluminisierung in der Halbleiter-Herstellung üblich, ist überflüssig.

Weil das Aufbringen der Farbfilterschichtsysteme bei tiefen Temperaturen erfolgt und mithin die darunterliegenden Lift-Off-Lackstrukturen entsprechend geringen Temperaturbelastungen ausgesetzt sind - mithin nur wenig temperaturresistent sein müssen - ergibt sich eine höchst vereinfachte Lift-Off-Technik, ohne dass heisse und höchst agressive Lösungsmittel oder Ultraschall für den Lift-Off eingesetzt werden müsste.

Die bevorzugte Verwendung der erwähnten Zwischenschicht vermeidet die negative Beeinflussung des reaktiven Abscheidens der ersten Filterschicht auf dem Lift-Off-Lack, insbesondere die Kantenschädigung der Lackstrukturen durch reaktive Ar-O₂-H₂O-Plasmen.

## Patentansprüche

1. Farbfilterflächenstruktur (31, 45), abgelegt auf einem Substrat (30) als Feld von Farbfilterschichtsystemen, in unterschiedlichen Spektren wirkend, **dadurch gekennzeichnet, dass** die dem Substrat zugewandte erste Schicht der Farbfilterschichtsysteme (31, 45) eine Zwischenschicht (45) ist, die eine in allen unterschiedlichen Spektren optisch im wesentlichen neutrale Schicht ist, die eine Dicke von 5-10 nm hat und aus SiO oder SiO₂ besteht.

2. Farbfilterflächenstruktur (31, 45) nach Anspruch 1, **dadurch gekennzeichnet, dass** die Zwischenschicht (45) aus SiO₂ besteht und eine niedriger brechende Schicht der Farbfilterschichtsysteme ist, welcher höher brechende Schichten folgen.

3. Verwendung der Farbfilterflächenstruktur (31, 45) nach Anspruch 1 oder 2 an LCD-Lightvalve-Projektoren oder für die Farbgebung für CCD-Sensoren.

## Claims

1. A colour filter surface structure (31, 45), deposited on a substrate (30) as a field of colour filter layer systems, acting in different spectrums, **characterized in that** the first layer of the colour filter layer systems (31, 45) facing the substrate is an intermediate layer (45) which is an optically substantially neutral layer in all different spectrums, having a thickness of 5-10 mm and consisting of SiO or SiO₂.

2. A colour filter surface structure (31, 45) according to claim 1, **characterized in that** the intermediate layer (45) consists of SiO₂ and is a lower refracting layer of the colour filter layer systems, which is followed by higher refracting layers.

3. Use of the colour filter surface structure (31, 45) according to claim 1 or 2 on LCD light valve projectors or for coloration for CCD sensors.

## Revendications

1. Structure de surface de filtre de couleur (31, 45), déposée sur un substrat (30) comme panneau de systèmes de couche de filtre de couleur, agissant dans différents spectres, **caractérisée en ce que** la première couche du système de couche de filtre de couleur (31, 45) orientée vers le substrat est une couche intermédiaire (45) qui est une couche essentiellement neutre optiquement dans tous les différents spectres, qui présente une épaisseur comprise entre 5 et 10 nm et qui est composée de SiO ou de SiO₂.

2. Structure de surface de filtre de couleur (31, 45) selon la revendication 1, **caractérisée en ce que** la couche intermédiaire (45) est composée de SiO₂ et est une couche faiblement réfringente du système de couche de filtre de couleur, avec ensuite des couches hautement réfringentes.

3. Utilisation de la structure de surface de filtre de couleur (31, 45) selon la revendication 1 ou 2 sur des projecteurs Light Valve LCD ou pour la coloration de capteurs CCD.
